(19) Europäisches Patentamt
European Patent Office
Office européen des brevets

(11) EP 3 886 514 A1

(12) **EUROPEAN PATENT APPLICATION**
published in accordance with Art. 153(4) EPC

(43) Date of publication:
**29.09.2021 Bulletin 2021/39**

(21) Application number: **18940821.4**

(22) Date of filing: **22.11.2018**

(51) Int Cl.:
*H04W 72/02* (2009.01)    *H04W 4/40* (2018.01)
*H04W 72/04* (2009.01)    *H04W 72/08* (2009.01)
*H04W 92/18* (2009.01)

(86) International application number:
**PCT/JP2018/043271**

(87) International publication number:
**WO 2020/105191 (28.05.2020 Gazette 2020/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FUJITSU LIMITED**
**Kanagawa 211-8588 (JP)**

(72) Inventors:
• **CHENG, Huiting**
  **Kawasaki-shi, Kanagawa 211-8588 (JP)**
• **WU, Jianming**
  **Kawasaki-shi, Kanagawa 211-8588 (JP)**
• **CHEN, Hongyang**
  **Kawasaki-shi, Kanagawa 211-8588 (JP)**

(74) Representative: **Haseltine Lake Kempner LLP**
**Cheapside House**
**138 Cheapside**
**London EC2V 6BJ (GB)**

(54) **COMMUNICATION DEVICE AND WIRELESS COMMUNICATION SYSTEM**

(57)     A communication device includes a division unit, a calculation unit and a selection unit. The division unit divides a first section including a plurality of resources into a plurality of second sections. The calculation unit provides, for each of the second sections, a first evaluation value related to a channel usage rate and to calculate, for each of selectable resources included in the first section, a second evaluation value according to the first evaluation value. The selection unit selects one or a plurality of resources to be allocated to transmission data from the selectable resources according to the second evaluation value.

START

| | |
|---|---|
| CONFIGURE SELECTION WINDOW | S1 |
| EXCLUDE RESERVED RESOURCE (CREATE SET A) | S2 |
| CALCULATE AVERAGE RECEPTION ENERGY OF EACH RESOURCE INCLUDED IN SET A | S3 |
| DIVIDE SELECTION WINDOW INTO PLURAL SUBWINDOWS | S4 |
| CALCULATE CHANNEL USAGE RATE OF EACH SUBWINDOW | S5 |
| CALCULATE RANKING INDEX (RI) OF EACH RESOURCE INCLUDED IN SET A | S6 |
| EXTRACT $\beta$% OF RESOURCES WITH SMALL RANKING INDEX (CREATE SET B) | S7 |
| SELECT RESOURCE TO BE ALLOCATED TO TRANSMISSION DATA FROM RESOURCES INCLUDED IN SET B | S8 |

END

F I G. 13

EP 3 886 514 A1

**Description**

TECHNICAL FIELD

The embodiments discussed herein are related to a communication device and a wireless communication system including a communication device.

BACKGROUND ART

Currently, many of network resources are occupied by traffic used by mobile terminals (including smartphones or feature phones). In addition, it is assumed that traffic used by mobile terminals will continue to expand in future.

Meanwhile, along with the expansion of IoT (Internet of things) services (for example, traffic systems, monitoring systems such as smart meters and devices), support for services with various requirement conditions is required. For this reason, in the communication standard of the Fifth Generation Mobile Communication (5G (NR: New Radio)), in addition to the standard technology of the Fourth Generation Mobile Communication (4G (LTE: Long Term Evolution)) (for example, see Non-Patent Documents 1 through 11), technologies for realizing higher data rates, larger capacities, lower delays are further required. Meanwhile, the Fifth Generation Communication Standard is considered in the working groups of 3GPP (for example, TSG-RAN WG1, TSG-RAN WG2 and so on) (for example, Non-Patent Documents 12 through 38).

In 5G, in order to support various services, support for use cases categorized as eMBB (Enhanced Mobile BroadBand), Massive MTC (Machine Type Communications), and URLLC (Ultra-Reliable and Low Latency Communication) is assumed.

Meanwhile, in the working groups of 3GGP, D2D (Device to Device) communication is also discussed. D2D communication is also called sidelink communication in some cases. In addition, as an example of D2D communication, V2X is considered. V2X includes V2V, V2P, V2I. V2V represents communication between vehicles. V2P represents communication between a vehicle and a pedestrian. V2I represents communication between a vehicle and a road infrastructure such as a sign or the like. The rules regarding V2X are described in Non-Patent Documents 39 and 40.

In V2X of 4G, for example, the autonomous resource allocation method (mode 4) is used. In the autonomous resource allocation method, candidate resources are decided from Selection Window including a plurality of resources according to the average RSSI (Received Signal Strength Indicator), and a resource is randomly selected from the candidate resources. Then, the communication device transmits the traffic using the selected resource.

PRIOR ART DOCUMENTS

NON-PATENT APPLICATION DOCUMENTS

Non-Patent Document 1: 3GGP TS 36.211 V15.2.0 (2018-06)
Non-Patent Document 2: 3GGP TS 36.212 V15.2.1 (2018-07)
Non-Patent Document 3: 3GGP TS 36.213 V15.2.0 (2018-06)
Non-Patent Document 4: 3GGP TS 36.300 V15.2.0 (2018-06)
Non-Patent Document 5: 3GGP TS 36.321 V15.2.0 (2018-07)
Non-Patent Document 6: 3GGP TS 36.322 V15.1.0 (2018-07)
Non-Patent Document 7: 3GGP TS 36.323 V15.0.0 (2018-07)
Non-Patent Document 8: 3GGP TS 36.331 V15.2.2 (2018-06)
Non-Patent Document 9: 3GGP TS 36.413 V15.2.0 (2018-06)
Non-Patent Document 10: 3GGP TS 36.423 V15.2.0 (2018-06)
Non-Patent Document 11: 3GGP TS 36.425 V15.0.0 (2018-06)
Non-Patent Document 12: 3GGP TS 37.340 V15.2.0 (2018-06)
Non-Patent Document 13: 3GGP TS 38.201 V15.0.0 (2017-12)
Non-Patent Document 14: 3GGP TS 38.202 V15.2.0 (2018-06)
Non-Patent Document 15: 3GGP TS 38.211 V15.2.0 (2018-06)
Non-Patent Document 16: 3GGP TS 38.212 V15.2.0 (2018-06)
Non-Patent Document 17: 3GGP TS 38.213 V15.2.0 (2018-06)
Non-Patent Document 18: 3GGP TS 38.214 V15.2.0 (2018-06)
Non-Patent Document 19: 3GGP TS 38.215 V15.2.0 (2018-06)
Non-Patent Document 20: 3GGP TS 38.300 V15.2.0 (2018-06)

Non-Patent Document 21: 3GGP TS 38.321 V15.2.0 (2018-06)
Non-Patent Document 22: 3GGP TS 38.322 V15.2.0 (2018-06)
Non-Patent Document 23: 3GGP TS 38.323 V15.2.0 (2018-06)
Non-Patent Document 24: 3GGP TS 38.331 V15.2.1 (2018-06)
Non-Patent Document 25: 3GGP TS 38.401 V15.2.0 (2018-06)
Non-Patent Document 26: 3GGP TS 38.410 V15.0.0 (2018-06)
Non-Patent Document 27: 3GGP TS 38.413 V15.0.0 (2018-06)
Non-Patent Document 28: 3GGP TS 38.420 V15.0.0 (2018-06)
Non-Patent Document 29: 3GGP TS 38.423 V15.0.0 (2018-06)
Non-Patent Document 30: 3GGP TS 38.470 V15.2.0 (2018-06)
Non-Patent Document 31: 3GGP TS 38.473 V15.2.1 (2018-07)
Non-Patent Document 32: 3GGP TR 38.801 V14.0.0 (2017-03)
Non-Patent Document 33: 3GGP TR 38.802 V14.2.0 (2017-09)
Non-Patent Document 34: 3GGP TR 38.803 V14.2.0 (2017-09)
Non-Patent Document 35: 3GGP TR 38.804 V14.0.0 (2017-03)
Non-Patent Document 36: 3GGP TR 38.900 V15.0.0 (2018-06)
Non-Patent Document 37: 3GGP TR 38.912 V15.0.0 (2018-06)
Non-Patent Document 38: 3GGP TR 38.913 V15.0.0 (2018-06)
Non-Patent Document 39: 3GGP TS 22.186 V16.0.0 (2018-09)
Non-Patent Document 40: 3GGP TS 37.885 V15.0.0 (2018-06)
Non-Patent Document 41: R1-1811835(2018-10)

## SUMMARY OF THE INVENTION

### PROBLEMS TO BE SOLVED BY THE INVENTION

The autonomous resource allocation method (mode 4) used in V2X of 4G is optimized for periodic traffic. However, in 5G, in order to support various services, traffics with different cycles may exist in a mixed manner. In addition, in 5G, transmission of traffic that is not periodic may be required. For example, when an on-vehicle sensor detects a danger in automatic driving, transmission of emergency data with a small latency may be required. For this reason, when the autonomous resource allocation method of 4G is applied to V2X communication that supports various services, an inappropriate resource may be allocated to the transmission traffic. Then, as a result, interference with respect to the V2X signal may become large.

An objective according to an aspect of the present invention is to provide a method for allocating an appropriate resource autonomously to the traffic in D2D communication.

### MEANS FOR SOLVING THE PROBLEMS

According to an aspect of the embodiments, a communication device includes a division unit that is configured to divide a first section including a plurality of resources into a plurality of second sections; a calculation unit that is configured to provide, for each of the second sections, a first evaluation value related to a channel usage rate and to calculate, for each of selectable resources included in the first section, a second evaluation value according to the first evaluation value; and a selection unit that is configured to select one or a plurality of resources to be allocated to transmission data from the selectable resources according to the second evaluation value.

### EFFECT OF THE INVENTION

According to the aspect described above, an appropriate resource may be autonomously allocated to the traffic in D2D communication.

### BRIEF DESCRIPTION OF DRAWINGS

FIG. 1 illustrates an example of a wireless communication system.
FIG. 2 illustrates an example of the autonomous resource allocation in V2X communication.
FIG. 3 illustrates an example of a method for calculating the average RSSI.
FIG. 4 illustrates an example of the distribution of reserved resources.

FIG. 5 explains one-shot transmission and periodic transmission.

FIG. 6 illustrates an example of the configuration of a base station.

FIG. 7 illustrates an example of the configuration of a wireless communication device.

FIG. 8 illustrates another example of the configuration of a wireless communication device.

FIG. 9 illustrates an example of the functions of a wireless communication device.

FIG. 10 illustrates an example of the division of a selection window.

FIG. 11 illustrates an example of the calculation of the channel usage rate.

FIG. 12 illustrates an example of the arrangement of resources in a selection window.

FIG. 13 is a flowchart illustrating an example of a resource allocation method.

FIG. 14 is a flowchart illustrating another example of a resource allocation method.

FIG. 15 is a flowchart illustrating yet another example of a resource allocation method.

FIG. 16 illustrates an example of multiplexing of a control signal and a data signal.

FIG. 17 illustrates an example of a method for selecting a resource from a selection window.

## DESCRIPTION OF EMBODIMENTS

Hereinafter, embodiments of the present invention are described in detail with reference to the drawings. The objects and examples disclosed herein are an example and are not to limit the scope of claims in the present patent application. For example, even when expressions of description are different, if technically equivalent, the arts of the present patent application may be applied. In addition, the embodiments disclosed herein may be combined appropriately as long as there is no inconsistency.

For the terms and technical contents used herein, the terms and technical contents may be used that are described as the standards of 3GPP or the like related to communications in the specifications (for example, 3GPP TS 38.211 V15.2.0) or contributions.

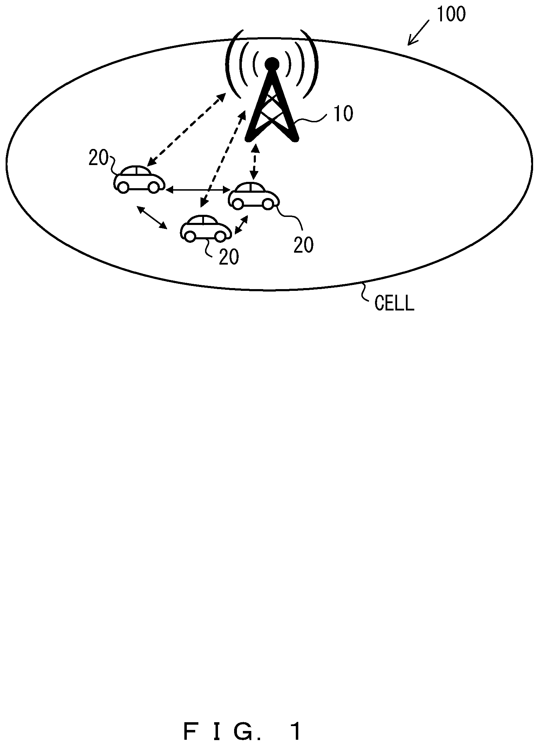

FIG. 1 illustrates an example of a wireless communication system according to an embodiment of the present invention. A wireless communication system 100 is equipped with a base station 10 and a plurality of wireless communication devices 20 as illustrated in FIG. 1. In this example, each of the wireless communication devices 20 is respectively implemented in a vehicle.

The base station 10 controls cellular communication (uplink/downlink communications via the Uu interface) of the wireless communication device 20. That is, the base station 10 receives uplink signals (the control signal and the data signal) from the wireless communication device 20. In addition, the base station 10 transmits downlink signals (the control signal and the data signal) to the wireless communication device 20.

The wireless communication device 20 can communicate with another communication device via the base station 10. In addition, the wireless communication device 20 can also communicate with another wireless communication device without via the base station 10. That is, the wireless communication device 20 supports D2D (Device-to-Device) communication. D2D communication transmits a signal via the PC5 interface, for example. Meanwhile, D2D communication may also be called "sidelink communication". In addition, the wireless communication device 20 may be called "UE (User Equipment)" or "VUE {Vehicle UE}".

The wireless communication device 20 is implemented in a vehicle, as described above. Therefore, the wireless communication device 20 is able to perform V2X communication, in this example. V2X includes V2V, V2P, V2I. V2V represents communication between vehicles. V2P represents communication between a vehicle and a pedestrian. V2I represents communication between a vehicle and a road infrastructure such as a sign or the like. Meanwhile, in this example, the allocation of a resource for sidelink communication is autonomously performed by each of the wireless communication device 20.

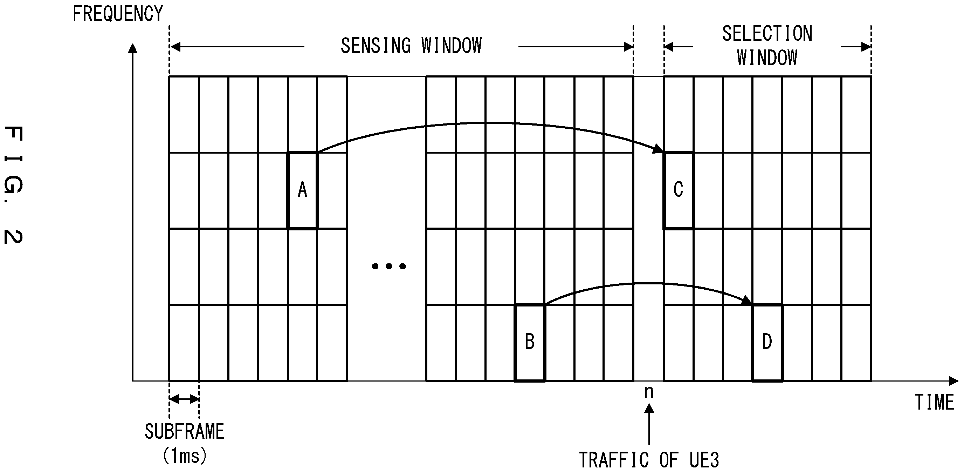

FIG. 2 illustrates an example of the autonomous resource allocation in V2X communication. In the description below, it is assumed that V2X traffic is generated in a wireless communication device (UE3) at time n.

The UE3 configures a sensing window just before the time n and configures a selection window immediately after time n+T ($T \leq 4$). The length of the sensing window is, while it is not particularly limited, 1000 m seconds for example. In addition, in this example, the length of the selection window is the time corresponding to seven subframes. Then, the UE3 selects the resource to be allocated to V2X traffic autonomously by the following procedures.

In step 1, the UE3 excludes resources used by another UE. The resources to be excluded are decided according to RSRP (Reference Signal Received Power) of control information and data transmitted from other UEs. For example, in the example illustrated in FIG. 2, a UE1 transmits a signal using a resource A, and a UE2 transmits a signal using a resource B. Meanwhile, it is assumed that the UE1 has reserved a resource C at the time of transmission using the resource A, and the UE2 has reserved a resource D at the time of transmission using the resource B. Further, it is assumed that RSRP in the resource A and the resource B is larger than a prescribed threshold. In this case, if the UE3 transmits V2X traffic using the resource C, the interference between the UE1 and the UE3 will become large. In a similar manner, if the UE3 transmits V2X traffic using the resource D, the interference between the UE2 and the UE3 will become large. Therefore, the UE3 excludes the resources C and D from the candidates of resources for transmitting its own data. As a result, a set A is created. Meanwhile, the resources included in the set A are selectable resources that may be allocated to transmission data among the resources included in the selection window.

In step 2, the UE3 calculates average RSSI (Received Signal Strength Indicator) with respect to each resource included in the set A. Here, the UE measures RSSI of each frequency channel constantly or regularly and records the measured value in a memory. Therefore, the UE3 is able to calculate average RSSI for each frequency channel from a plurality of RSSI values obtained in the past (for example, a plurality of RSSI values obtained in the sensing window).

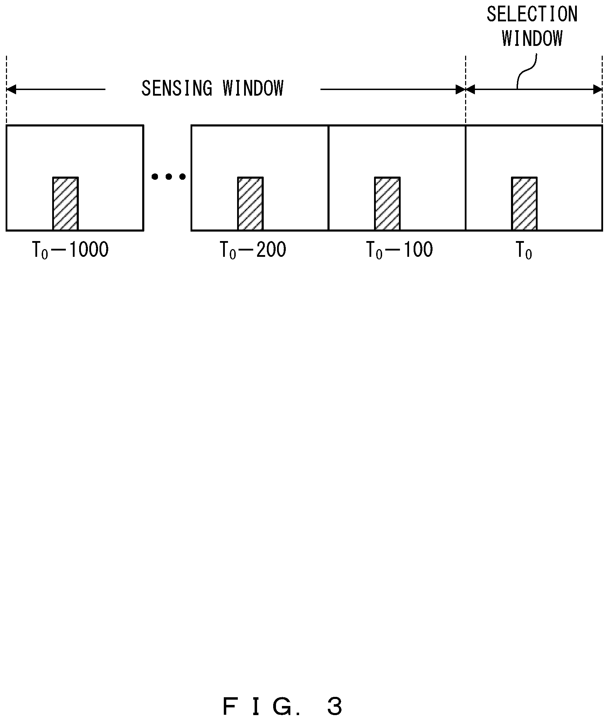

For example, in the example illustrated in FIG. 3, average RSSI of the target resource at time To in the selection window is calculated by mathematical expression (1). When the UE3 transmits V2X traffic at a prescribed cycle, it is preferable to calculate average RSSI according to the RSSI values measured in the cycle. In FIG. 3, it is assumed that the UE3 transmits V2X traffic at an interval of 100m seconds. In this case, average RSSI is calculated from the ten RSSI values obtained in time "$T_0$-1000" to "$T_0$-100". Meanwhile, when average RSSI is calculated with respect for a certain resource, RSSI of the same frequency as this resource is used.

$$Average\ RSSI = \frac{\sum_{j=1}^{10} RSSI\left(T_0 - 100j\right)}{10} \qquad (1)$$

Here, when a signal is transmitted using a resource with a large average RSSI, the quality of the signal may become low. Therefore, the UE3 selects resources with a small average RSSI as candidates for transmitting V2X traffic. At this time, the UE3 ranks the respective resources included in the set A according to their average RSSI. Then, the UE3 selects 20 percent (or 20 percent or more) of the resources in the ascending order from the resource with the lowest average RSSI. After this, the resources selected from the set A are moved to a set B.

In step 3, the UE3 randomly selects (or reserve) one resource from the plurality of resources included in the set B. Then, the UE3 transmits V2X traffic using the selected resource. At the time of the transmission using the selected resource, a time/frequency resource for transmitting data in the next period is reserved.

As described above, the wireless communication device autonomously selects a resource for transmitting V2X traffic. Here, the wireless communication device uses a resource with which a good radio wave environment is expected, according to the reservation mechanism of resources and the average RSSI of each resource regardless of the distribution of the resources occupied or reserved in the time domain. Therefore, in D2D communication, autonomous resource allocation is realized with which a good communication quality is obtained. Meanwhile, autonomous resource allocation in LTE-V2X is described in 3GPP TS 36.213 V15.2.0 14.1.1.6, for example.

However, in the 5G communication system, in order to support various services, traffics with different transmission cycles may exist in a mixed manner. In addition, in 5G, transmission of traffic that is not periodic may be required. For example, when an on-vehicle sensor detects a danger in automatic driving, transmission of emergency data with a small latency may be required. For this reason, when occupied or reserved resources are distributed unevenly in the time domain, reliability of the communication may deteriorate.

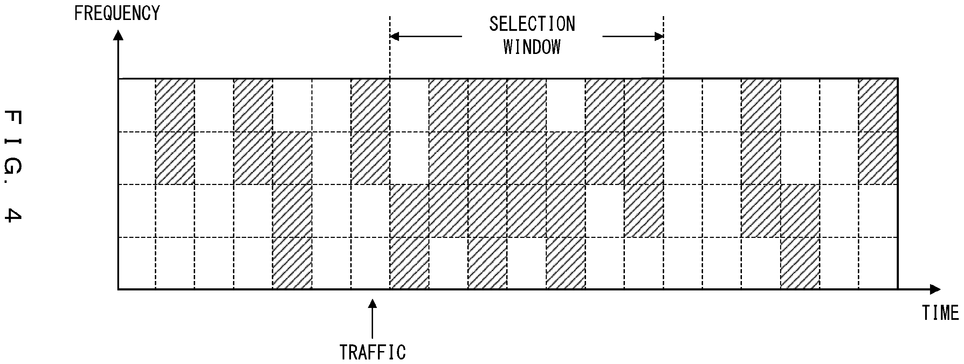

For example, in the example illustrated in FIG. 4, many of the resources in the selection window configured at the time when traffic is generated are reserved or occupied by other wireless communication devices. Meanwhile, the shaded portions in FIG. 4 represent resources that are reserved or occupied by another wireless communication device. Note that, in the description below, the "resources reserved" by another wireless communication device may include the "resources occupied" by another communication device.

Specifically, there are eight resources that are not reserved in the selection window. That is, there are eight resources that are included in the set A. In this instance, for example, there are two cases.

In the first case, the wireless communication device selects resources with a small average RSSI from the eight resources included in the set A. Here, the resources selected from the set A according to the average RSSI are included in the set B. Then, the wireless communication device allocates a resource that is randomly selected from the resources included in the set B to the transmission traffic.

In this case, there are small amount of resources that are not reserved (that is, selectable resources) in the selection window, and therefore, the possibility increases that a plurality of wireless communication devices selects the same resource. As a result, reliability of communication may deteriorate.

In the second case, the wireless communication device relaxes the removal condition of resources regarding RSRP or the selection condition of resources regarding RSSI to increase the number of selectable resources and increases the number of resources included in the set A or in the set B. Here, the possibility that resources with bad quality remain in the set A or in the set B increases. In other words, the wireless communication device may have no choice but to select a resource with bad quality. As a result, reliability of communication may deteriorate.

Meanwhile, a problem caused by uneven distribution of reserved resources may be solved by making the selection window long. However, when the selection window becomes long, latency becomes high. Therefore, it is not preferable to make the selection window long for a service that requires a low latency (for example, URLLC).

In addition, the wireless communication device usually does not reserve a resource for the next transmission in a case of transmitting traffic that is not periodic. That is, the wireless communication device may perform one-shot transmission. Then, in a case in which one-shot transmission is performed, the average RSSI calculated with respect to each resource in the selection window may not represent the influence of interference with a good accuracy.

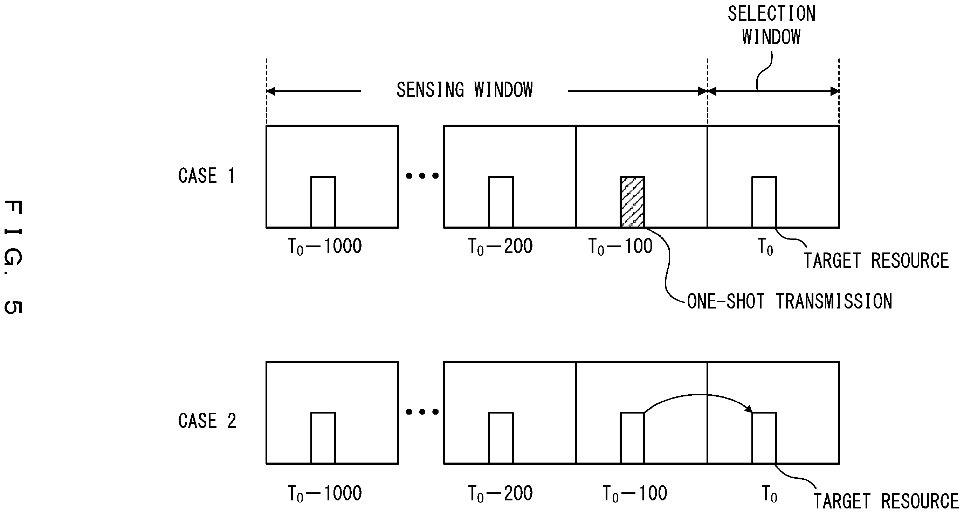

For example, it is assumed that, in FIG. 5, one-shot transmission is performed in the case 1 and periodic transmission is performed in the case 2. Here, it is assumed that the average RSSI of a target resource is calculated from a plurality of RSSI values in the sensing window, in a similar manner as in the example illustrated in FIG. 3. In this case, even if the average RSSI calculated in the cases 1 and 2 is the same one another, the interference that the target resource receives is different one another. Specifically, the interference in the case 1 in which one-shot transmission is performed may become smaller than the interference in the case 2 in which one-shot transmission is not performed.

As described above, in a case in which periodic transmission and one-shot transmission exist in a mixed manner, the average RSSI calculated with respect to each resource in a selection window may not represent the influence of interference with a good accuracy.

Embodiments

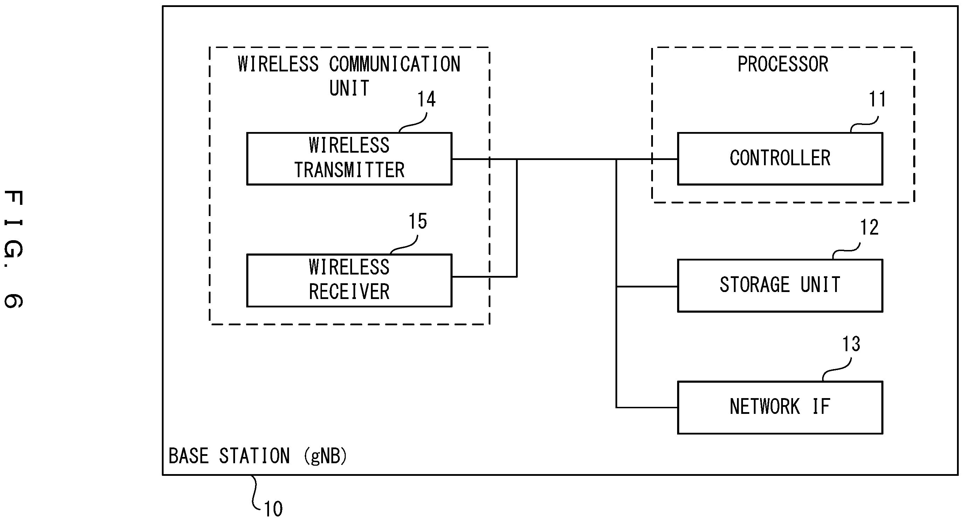

FIG. 6 illustrates an example of the configuration of the base station 10. The base station 10 is a next generation base station device (gNB: Next generation Node B), for example. The base station 10 is equipped with a controller 11, a storage unit 12, a network interface 13, a wireless transmitter 14, and a wireless receiver 15, as illustrated in FIG. 6. Meanwhile, the base station 10 may also be equipped with other circuits or functions that are not illustrated in FIG. 6.

The controller 11 controls cellular communication provided by the base station 10. In addition, the controller 11 may decide a parameter for D2D communication (that is, sidelink communication) performed by the wireless communication device 20. Meanwhile, in this example, the controller 11 is realized by a processor. However, a part of the functions of the controller 11 may be realized by a hardware circuit.

The storage unit 12 stores a software program executed by the processor. In addition, the storage unit 12 stores data and information required for controlling the operations of the base station 10. Meanwhile, the storage unit 12 is realized by a semiconductor memory, for example. The network interface 13 provides an interface for connecting to the core network. That is, the base station 10 is able to connect to another base station 10 or the network management system that controls the base station 10 via the network interface 13.

The wireless transmitter 14 transmits the wireless signal of cellular communication, according to the instruction given by the controller 11. That is, the wireless transmitter 14 transmits the downlink signal to the wireless communication device 20 in the cell. The wireless receiver 15 receives the wireless signal of cellular communication, according to the instruction given by the controller 11. That is, the wireless receiver 15 receives the uplink signal transmitted from the wireless communication device 20 in the cell. Meanwhile, cellular communication is provided using the 2.4 GHz band and/or the 4GHz band, for example.

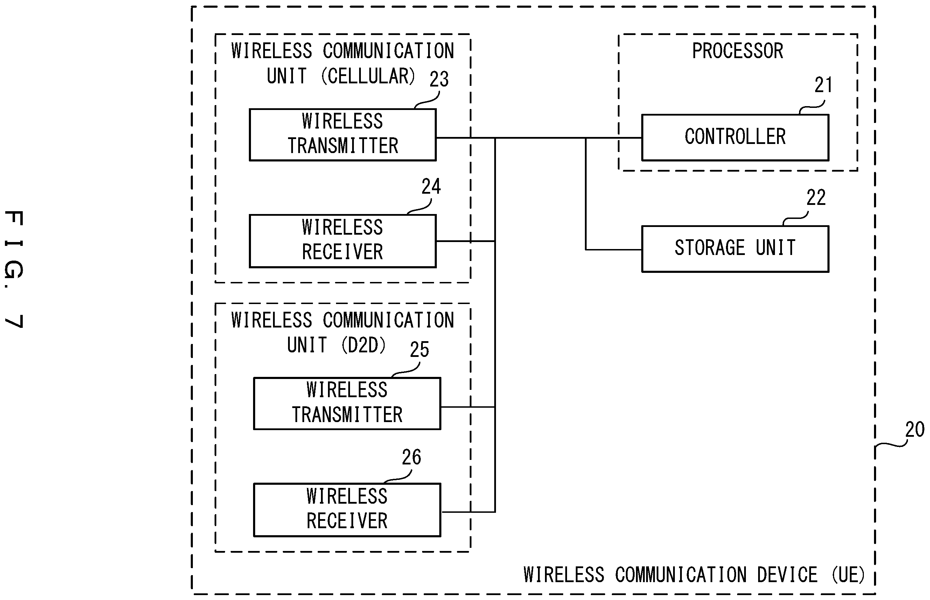

FIG. 7 illustrates an example of the configuration of the wireless communication device 20. The wireless communication device 20 supports cellular communication and D2D communication. Meanwhile, D2D communication is realized using a frequency band that is different from that of cellular communication. For example, D2D communication is provided using the 6GHz band. However, D2D communication may share the same frequency band as that of the uplink of cellular communication. The wireless communication device 20 is equipped with a controller 21, a storage unit 22, a wireless transmitter 23, a wireless receiver 24, a wireless transmitter 25, a wireless receiver 26. Meanwhile, the wireless communication device 20 may also be equipped with other circuits or functions that are not illustrated in FIG. 7.

The controller 21 controls cellular communication and D2D communication provided by the wireless communication device 20. Meanwhile, in this example, the controller 21 is realized by a processor. In this case, the controller 21 provides the functions to control cellular communication and D2D communication by executing a software program stored in the storage unit 22. However, a part of the functions of the controller 21 may be realized by a hardware circuit.

The storage unit 22 stores a software program executed by the processor. In addition, the storage unit 22 stores data and information required for controlling the operations of the wireless communication device 20. Meanwhile, the storage unit 22 is realized by a semiconductor memory, for example.

The wireless transmitter 23 transmits the wireless signal of cellular communication, according to the instruction given by the controller 21. That is, the wireless transmitter 23 transmits the uplink signal to the base station 10. The wireless receiver 24 receives the wireless signal of cellular communication, according to the instruction given by the controller 21. That is, the wireless receiver 24 receives the downlink signal transmitted from the base station 10.

The wireless transmitter 25 transmits the wireless signal of D2D communication, according to an instruction given by the controller 21. That is, the wireless transmitter 25 transmits the D2D signal to another wireless communication device, using a resource selected autonomously in the wireless communication device 20. The wireless receiver 26 receives the wireless signal of D2D communication, according to an instruction given by the controller 21. That is, the wireless receiver 26 receives the D2D signal transmitted from another wireless communication device. Meanwhile, in this example, the D2D signal includes V2X data and V2X control information.

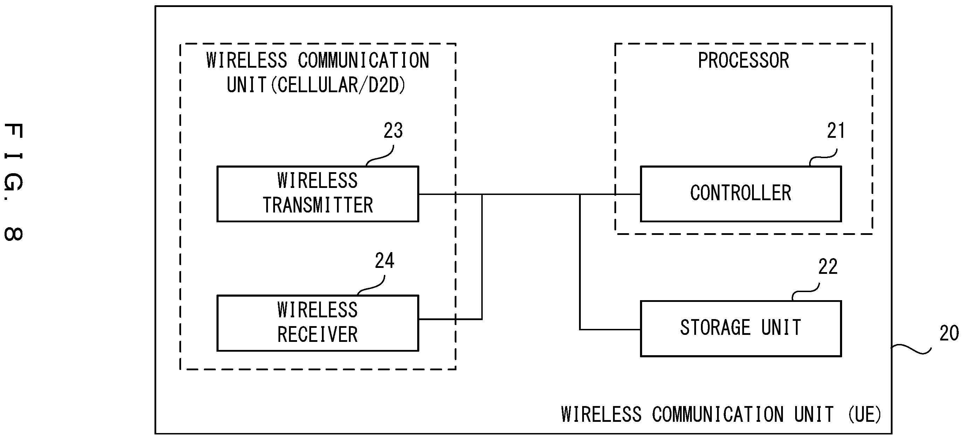

In the example illustrated in FIG. 7, the wireless communication unit for cellular communication and the wireless communication unit for D2D communication are provided separately from each other, but the wireless communication device 20 is not limited to this configuration. For example, as illustrated in FIG. 8, the wireless communication unit for cellular communication and the wireless communication unit for D2D communication may be shared. In this case, the wireless transmitter 23 is able to transmit the cellular signal and the D2D signal, and the wireless receiver 24 is able to receive the cellular signal and the D2D signal.

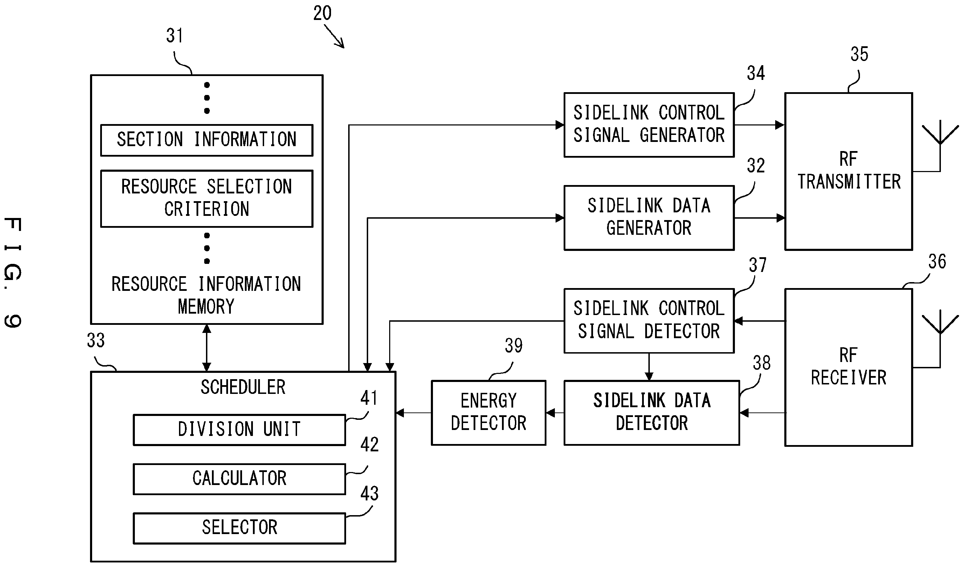

FIG. 9 illustrates an example of the functions of the wireless communication device 20. The wireless communication device 20 is equipped with a resource information memory 31, a sidelink data generator 32, a scheduler 33, a sidelink control signal generator 34, an RF transmitter 35, an RF receiver 36, a sidelink control signal detector 37, a sidelink data detector 38, an energy detector 39, as illustrated in FIG. 9. Meanwhile, the wireless communication device 20 may also be equipped with other functions that are not illustrated in FIG. 9. In addition, in FIG. 9, the functions for cellular communication are omitted.

The resource information memory 31 stores resource allocation control information related to the allocation of resources for sidelink communication. The resource allocation control information includes section information (it may also be paraphrased as window information), a resource selection criterion, and so on. Meanwhile, the resource allocation control information is given by the user of the wireless communication device 20 or the network administrator, for example. Alternatively, the resource allocation control information may be given from the base station 10.

The sidelink data generator 32 generates a sidelink data signal from data generated by the application of the wireless communication device 20. For example, in a case in which the wireless communication device 20 is implemented on the vehicle and the application is an automatic driving program, data that represent sensor information is generated. Then, the sidelink data generator 32 outputs a sidelink data according to a transmission instruction given from the scheduler 33.

The scheduler 33 allocates, when a sidelink data signal is generated by the sidelink data generator 32, a resource to the sidelink data signal. At this time, the scheduler 33 executes the resource allocation referring to the resource allocation control information stored in the resource information memory 31 and sidelink control information received from another wireless communication device. In addition, as needed, the scheduler 33 refers to the value measured by the energy detector 39.

The sidelink control signal generator 34 generates a sidelink control signal that represents the resource allocation decided by the scheduler 33. Therefore, the sidelink control signal includes resource allocation information that represent the resource allocated to sidelink data. In addition, when sidelink data is transmitted periodically, the sidelink control signal may also include information that represents the reservation of the resource that is to be used for next data transmission.

The RF transmitter 35 transmits the sidelink data signal generated by the sidelink data generator 32 and the sidelink control signal generated by the sidelink control signal generator 34 via an antenna. The RF receiver 36 receives a wireless signal transmitted from another wireless communication device.

The sidelink control signal detector 37 detects a sidelink control signal from a received signal and obtains sidelink control information transmitted from another wireless communication device. The sidelink control information includes resource allocation information that represents the resource allocated to sidelink data, and information related to the reservation of a resource.

The sidelink data detector 38 detects a sidelink data signal from a received signal according to the sidelink control information that the sidelink control signal detector 37 has obtained. Then, the sidelink data detector 38 reproduces data from the detected sidelink data signal. The data is passed to the application.

The energy detector 39 measures the energy of a received signal. Here, the energy detector 39 measures the RSSI of a received signal. However, the energy detector 39 may also measure another indicator. For example, the energy detector 39 may measure the RSRP of a received signal. In addition, the energy detector 39 measures the energy of the received signal for each resource. For example, the energy detector 39 measures, for each frequency, and for each subframe (that is, the data channel or the control channel), the energy of the received signal. Alternatively, the energy detector 39 may regularly measure the energy of the received signal in each frequency channel.

The scheduler 33 is realized by the controller 21 illustrated in FIG. 7 and FIG. 8. That is, the scheduler 33 includes a division unit 41, a calculator 42, a selector 43. The functions of the division unit 41, the calculator 42, and the selector 43 are realized by the processor executing a software program, for example.

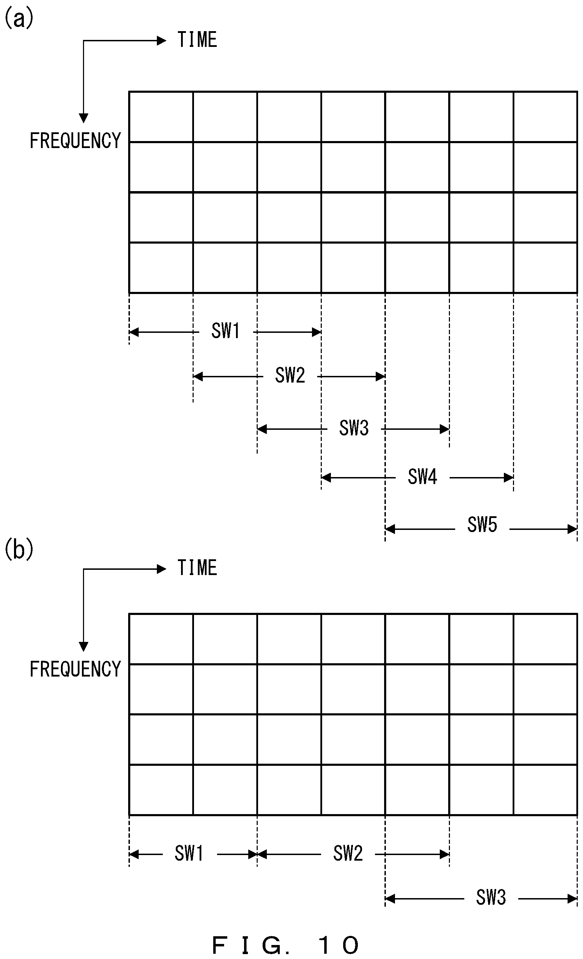

FIGS. 10A and 10B illustrate an example of the division of a first section. In this example, the first section corresponds to a "selection window." It is assumed that when sidelink data is generated in the wireless communication device, the selection window illustrated in FIGS. 10A and 10B is configured. The size of the selection window is described in the section information stored in the resource information memory 31. In this example, the selection window has seven slots (or subframes) in the time domain and has four subchannels in the frequency domain. Here, in the description below, it is assumed that a wireless resource composed of one subchannel and one slot (or subframe) is called a "resource." In this case, the selection window has 28 resources.

The division unit 41 generates a plurality of second sections by dividing the selection window including a plurality of resources, in the time domain. In this example, the second section is called a "subwindow." At this time, the division unit 41 divides the selection window according to the section information stored in the resource information memory 31. Meanwhile, the section information includes information representing the size of the subwindow.

The selection window is divided into subwindows SW1 through SW5 that have the same size with each other, as illustrated in FIG. 10(a), for example. In this example, each of the subwindows SW1 through SW5 is generated so as to overlap with other one or more subwindows in the time domain. However, as illustrated in FIG. 10(b), the sizes of the subwindows do not have to be the same with each other. In addition, the subwindows may also be generated so as not to overlap with another subwindow.

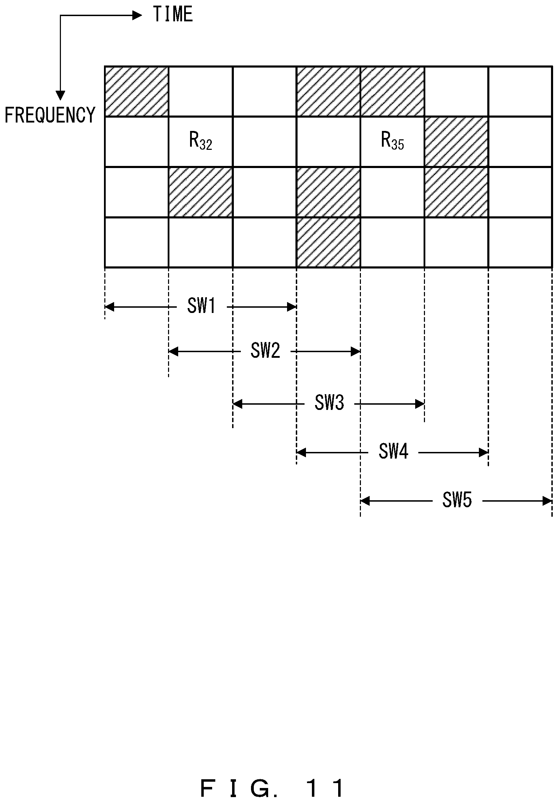

FIG. 11 illustrates an example of the calculation of the channel usage rate. In this example, in a similar manner as in the example illustrated in FIGS. 10A and 10B, the selection window has seven slots in the time domain and has four subchannels in the frequency domain. Meanwhile, in FIG. 11, the shaded portions represent the resources that are reserved by another wireless communication device.

The calculator 42 determines whether each resource in the selection window is reserved by another wireless communication device, according to the sidelink control information that the wireless communication device 20 received from other wireless communication devices. Meanwhile, each wireless communication device reserves, when periodically transmitting sidelink data, a resource for transmitting next sidelink data. The reservation of the resource is reported to each wireless communication device by the sidelink control information.

Then, the calculator 42 calculates the channel usage rate for each subwindow. The channel usage rate CUR(i) of a subwindow SWi is calculated by the expression (2).

$$CUR(i) = \frac{N_r}{N_T} \qquad (2)$$

$N_T$ represents the total number of resources included in the subwindow SWi. $N_r$ represents the number of resources reserved by another wireless communication device in the resources included in the subwindow SWi.

For example, in the subwindow SW1, in the twelve resources, two resources are reserved by another wireless communication device. Therefore, the channel usage rate CUR(1) of the subwindow SW1 is "1/6 (17 percent) ." Meanwhiel, in the subwindow SW2, in the twelve resources, four resources are reserved by another wireless communication device. Therefore, the channel usage rate CUR(2) of the subwindow SW2 is "1/3 (33 percent)." Note that the resources that are not reserved by another communication device are included in the set A.

In addition, the channel usage rate may also be calculated as a parameter that indicates the congestion level of the channel, for example. For example, in the same manner as in the method for averaging RSSI, the average of a plurality of CBR (Channel Busy Ratio) measurement values obtained in the sensing window is calculated. Meanwhile, the channel usage rate may also be the largest value in the plurality of CBR measurement values.

The calculator 42 calculates the average reception energy for each resource included in the set A. That is, the calculator 42 calculates the average reception energy for each resource that is not reserved by another wireless communication device. In this example, it is assumed that, as the average reception energy, the average of a plurality of RSSI measurement values (that is, the average RSSI) is calculated.

The average RSSI is calculated using the expression (1), for example, as explained with reference to FIG. 3. However, in a case in which a transmission that is not periodic (for example one-shot transmission) is considered, the calculator 42 may calculate the average RSSI of the target resource using the expression (3).

$$Average\ RSSI = \frac{\sum_{j=2}^{10} RSSI(T_0 - 100j) + x \cdot RSSI(T_0 - 100)}{10} \qquad (3)$$

$$0 \le x \le 1$$

In the expression (3), the value of x depends on whether or not one-shot transmission was performed at the measurement timing. For example, when one-shot transmission was performed, a value smaller than 1 is used as the weight x. In this case, the value of x may be decided in advance. Meanwhile, the value of x may be determined according to the instruction from the base station. On the other hand, when one-shot transmission was not performed, the weight x is 1. In this case, the expression (3) becomes the same as the expression (1).

Next, the calculator 42 calculates a ranking index RI for each resource included in the set A. That is, the calculator 42 calculates the ranking index RI for each resource that is not reserved by another wireless communication device. The ranking index RI is an example of an evaluation value that represents the selection criterion for the resources (that is, the criterion for moving a resource from the set A to the set B). In this example, the ranking index RI is calculated by the expression (4).

$$RI_{xy} = RSSI_{xy} \cdot \max \left\{ f\left( CUR(i) \right) \right\} \qquad (4)$$

$$f\left( CUR(i) \right) = \alpha(i) \cdot CUR(i)$$

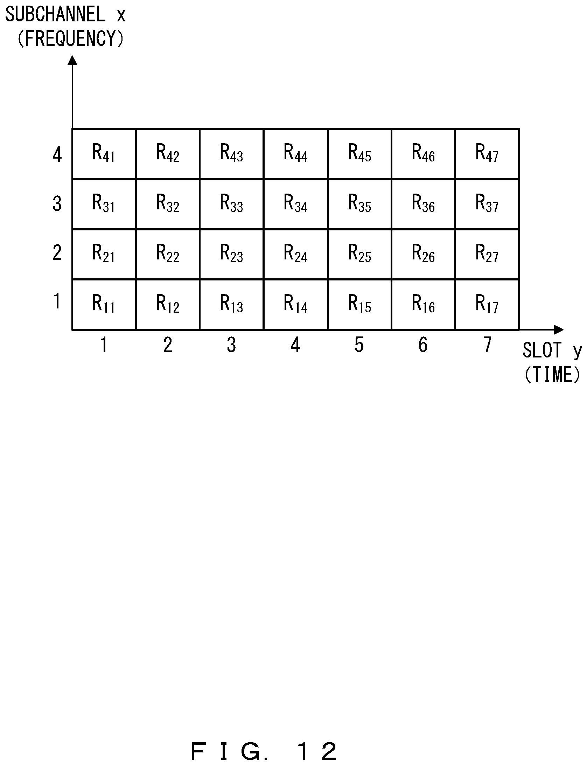

$RI_{xy}$ represents the ranking index for a resource $R_{xy}$. As illustrated in FIG. 12, $R_{xy}$ identifies the resources in the selection window using the slot number y (y=1 through 7) and the subchannel number x (x=1 through 4). $RSSI_{xy}$ represents the average RSSI calculated for the resource $RI_{xy}$. "max" represents an operator for selecting the largest value in f{CUR(i)}. $\alpha(i)$ represents a coefficient given with respect to the subwindow SWi. Meanwhile, the value of $\alpha(i)$ may be decided according to the size of the subwindow SWi. Alternatively, the value of $\alpha(i)$ may be the same with respect to all the subwindows.

An example of the calculation of the ranking index RI is presented. Here, the ranking indexes ($RI_{32}$, $RI_{35}$) for the two resources $R_{32}$, $R_{35}$ presented in FIG. 11 are calculated. Meanwhile, the channel usage rates (CUR(1) through CUR(5)) for each subwindow SW1 through SW5 are as follows.

    CUR(1)=1/6 (17 percent)
    CUR(2)=1/3 (33 percent)
    CUR(3)=1/3 (33 percent)
    CUR(4)=1/2 (50 percent)
    CUR(5)=1/4 (25 percent)

Here, it is assumed that the average RSSI of the resources $RI_{32}$, $RI_{35}$ are the same as that of each other, and that is referred to as "E". The coefficient $\alpha(i)$ is "1" for both.

The resource $R_{32}$ is included in both of the subwindows SW1 and SW2. Here, the largest value of the channel usage rates of the subwindow S1 and S2 is "CUR(2)=1/3." Therefore, the ranking index $RI_{32}$ of the resource $R_{32}$ is E/3. coding (variable-length coding) and outputs a coded video.

The resource $R_{35}$ is included in the subwindows SW3 through SW5. Here, the largest value of the channel usage rates of the subwindows SW3 through SW5 is "CUR(4)=1/2." Therefore, the ranking index $RI_{35}$ of the resource $R_{35}$ is E/2.

The calculation method for the ranking index RI is not limited to the expression (4). For example, the calculator 42 may calculate the ranking index RI according to the sum of the average RSSI and the channel usage rate CUR. In this case, the weight may be multiplied with either one or both of the average RSSI and the channel usage rate CUR.

However, when the calculation is made according to any method, it is preferable that the lower the channel usage rate CUR, the smaller the value of the ranking index RI, and the lower the average RSSI, the smaller the value of the ranking index RI. The expression (4) satisfies this policy.

The calculator 42 calculates the ranking index RI for each resource (hereinafter, a selectable resource) that is not reserved by another wireless communication device, as described above. Then, the calculator 42 arranges the selectable resources in the ascending order of the ranking index. That is, ranking is performed with respect to the selectable resources according to the ranking index.

The selector 43 selects a resource to be allocated to transmission data from the selectable resources whose rank according to the ranking index RI is higher than a prescribed threshold. For example, the selector 43 extracts, from all the selectable resources, β percent of the selectable resources of whose value of ranking index RI is small. In the example illustrated in FIG. 11, there are 20 selectable resources in the selection window. In this case, assuming β=30, six selectable resources are extracted in the ascending order of the ranking index RI from the smallest value.

Meanwhile, the value of β may be decided according to the size of the selection window and/or the size of each subwindow. In addition, the value of β may also be decided according to the channel usage rate of the selection window.

Alternatively, $\beta$ may be a fixed value decided in advance.

The selector 43 randomly selects one resource from the extracted selectable resources. In addition, the selector 43 allocates the selected resource for the transmission data. Then, the wireless communication device 20 transmits V2X data using the resources allocated by the selector 43.

Next, an example of procedures for allocating a resource for transmission data is presented. In this example, it is assumed that a first section (for example, a selection window) illustrated in FIG. 11 and FIG. 12 is configured, and the second sections (for example, the subwindows SW1 through SW5) are generated. In addition, in order to simplify the explanation, it is assumed that the RSSI of each subchannel is constant. As an example, it is assumed that the average RSSI of the subchannels 1, 2, 3, 4 are "41," "40," "39," "50," respectively. Further, the coefficient $\alpha$ is 1. In this case, the RI of resources that are not reserved (that is, the resources included in the set A) is calculated as follows.

$$RI_{11}=41\times\max\{17\}=41\times17=697$$

$$RI_{12}=41\times\max\{17,33\}=41\times33=1353$$

$$RI_{13}=41\times\max\{17,33,33\}=41\times33=1353$$

$$RI_{15}=41\times\max\{33,50,25\}=41\times50=2050$$

$$RI_{16}=41\times\max\{50,25\}=41\times50=2050$$

$$RI_{17}=41\times\max\{25\}=41\times25=1025$$

$$RI_{21}=40\times\max\{17\}=40\times17=680$$

$$RI_{23}=40\times\max\{17,33,33\}=40\times33=1320$$

$$RI_{25}=40\times\max\{33,50,25\}=40\times50=2000$$

$$RI_{27}=40\times\max\{25\}=40\times25=1000$$

$$RI_{31}=39\times\max\{17\}=39\times17=663$$

$$RI_{32}=39\times\max\{17,33\}=39\times33=1287$$

$$RI_{33}=39\times\max\{17,33,33\}=39\times33=1287$$

$$RI_{34}=39\times\max\{33,33,50\}=39\times50=1950$$

$$RI_{35}=39\times\max\{33,50,25\}=39\times50=1950$$

$$RI_{37}=39\times\max\{25\}=39\times25=975$$

$$RI_{42}=50\times\max\{17,33\}=50\times33=1650$$

$$RI_{43}=50\times\max\{17,33,33\}=50\times33=1650$$

$$RI_{46}=50\times\max\{50,25\}=50\times50=2500$$

$$RI_{47}=50\times\max\{25\}=50\times25=1250$$

The 20 resources included in the set A are arranged in the ascending order of the ranking index RI. Then, from the resources included in the set A, β percent of the resources that have a small ranking index RI are extracted. Here, assuming β=20, four resources are extracted. Specifically, resources $RI_{31}$, $RI_{21}$, $RI_{11}$, $RI_{37}$ are extracted. Then, the extracted four resources are moved to the set B.

After this, the selector 43 randomly selects one resource from the four resources included in the set B. In addition, the selector 43 allocates this selected resource for the transmission data. Then, the wireless communication device 20 transmits sidelink data using the resources allocated by the selector 43. At this time, the wireless communication device 20 generates resource allocation information that represents the selected resource and transmits a sidelink control signal including the resource allocation information.

As described above, in the communication device 20, resources included in a subwindow in which, many resources that are not reserved (that is, selectable resources) remain are selected with high priority. Therefore, the possibility that a resource in a bad radio-wave environment (that is, the average RSSI is high) is selected becomes low, and the communication quality may improve. Meanwhile, in the example illustrated in FIG. 11, compared to the subwindow that includes the resource $R_{35}$, the channel usage rate of the subwindow that includes the resource $R_{32}$ is low, and therefore, compared to the resource $R_{35}$, the resource $R_{32}$ is selected with high priority.

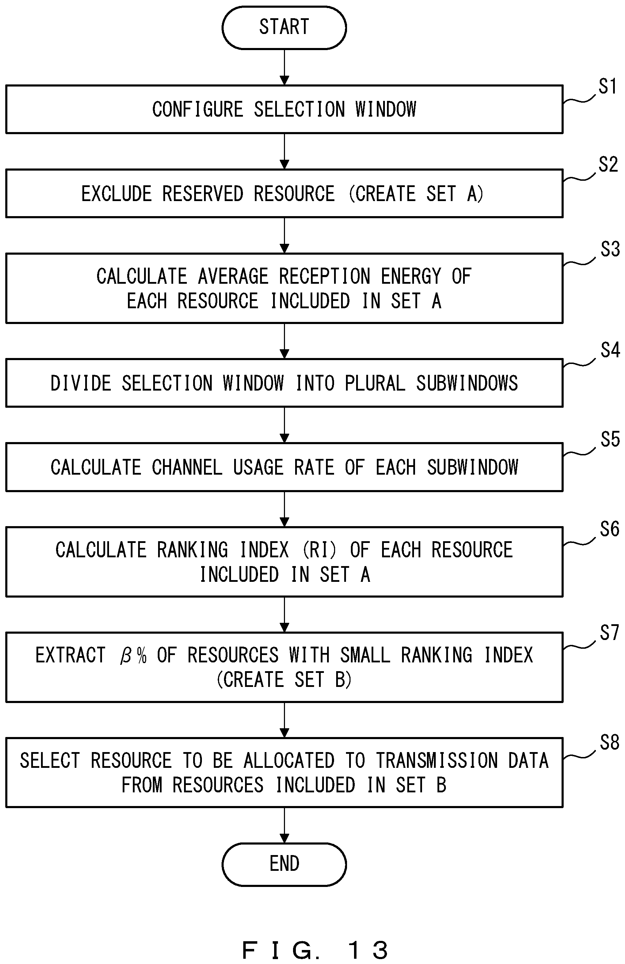

FIG. 13 is a flowchart illustrating an example of a resource allocation method according to an embodiment of the present invention. The process of the flowchart is executed when transmission data is generated by an application implemented in the wireless communication device 20, for example.

The energy detector 39 regularly measures the reception energy for each of the plurality of frequency channels for sidelink communication. In this example, it is assumed that the energy detector 39 regularly measures the RSSI of each frequency channel. The measurement result of the energy detector 39 is recorded in the resource information memory 31 or in another memory.

In S1, the scheduler 33 configures a first section (may be referred to as a selection window below) that includes a plurality of resources, according to the generation of transmission data. The size of the selection window follows the section information stored in the resource information memory 31.

In S2, the scheduler 33 excludes resources that are reserved by another wireless communication device from the resources included in the selection window. That is, the scheduler 33 creates the set A. The set A includes the resources in the selection window that are not reserved by another wireless communication device. Meanwhile, the scheduler 33 is able to detect a resource that is reserved by another wireless communication device by obtaining sidelink control information transmitted from another wireless communication device.

In S3, the scheduler 33 calculates the average reception energy (in this example, the average RSSI) of each resource included in the set A. At this time, the scheduler 33 may calculate the average RSSI using the expression (1) or the expression (3).

In S4, the division unit 41 divides the selection window into a plurality of second sections (may be referred to as subwindows below). The size and the position in the time domain of each subwindow follows the section information stored in the resource information memory 31. Meanwhile, the sizes of the plurality of subwindows do not have to be the same with each other. In addition, the plurality of subwindows may be arranged so as to overlap with each other or may be arranged not to overlap with each other.

In S5, the calculator 42 calculates a first evaluation value for each subwindow. The first evaluation value is calculated as the channel usage rate using the expression (2), for example. Meanwhile, as described above, the scheduler 33 recognizes a resource in the selection windows that is reserved by another wireless communication device, by obtaining sidelink control information transmitted from another wireless communication device.

In S6, the calculator 42 calculates a second evaluation value with respect to each resource included in the set A. The second calculation value is the ranking index RI, for example. The ranking index RI is calculated using the expression (4), for example. In this case, the ranking index RI depends on the average RSSI and the channel usage rate. Specifically, the lower the average RSSI of the frequency of a given resource (hereinafter, the "target resource") is lower, the smaller the value of the ranking index. In addition, the lower the channel usage of the subwindow including the target resource, the smaller the value of the ranking index RI. Then, the calculator 42 arranges the respective resources included in the set A in the ascending order of the ranking index RI.

In S7, the selector 43 extracts, from the resources included in the set A, the $\beta\%$ of the resources that have a small value of the ranking index RI. The extracted resources are included in the set B. That is, the scheduler 33 creates the set B.

In S8, the selector 43 randomly selects a resource to be allocated to the transmission data from the resources included in the set B. After this, the wireless communication device 20 transmits the transmission data using the resource selected in S8. Meanwhile, the order for executing the steps in this flowchart may be changed arbitrarily as long as there is no inconsistency. For example, the first section may be divided to generate a plurality of second sections before executing S2 or S3.

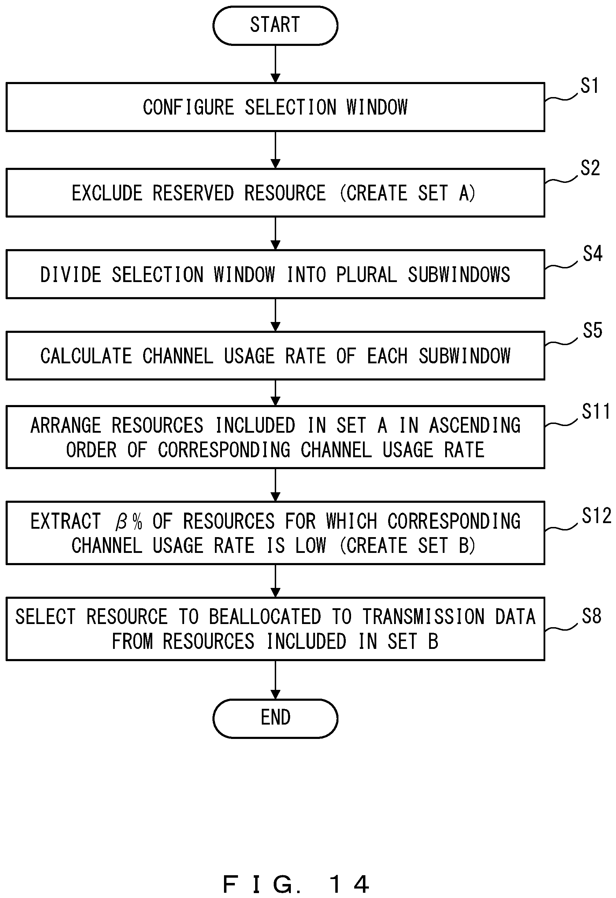

FIG. 14 is a flowchart illustrating another example of a resource allocation method. The processes in S1 through S5 are substantially the same in FIG. 13 and FIG. 14. That is, the scheduler 33 divides the selection window (that is, the first section) to generate a plurality of subwindows (that is, the second sections) and calculates the channel usage rate (that is, the first evaluation value) of each subwindow. However, in the example illustrated in FIG. 14, the process in S3 is not executed. That is, the scheduler 33 does not need to calculate the average reception energy for each resource included in the set A.

In S11, the calculator 42 arranges the resources included in the set A in the ascending order of the channel usage rate of the corresponding subwindow. Meanwhile, the subwindow corresponding to a given resource represents the subwindow that includes this resource. For example, in the example illustrated in FIG. 11, the subwindow corresponding to the resource $R_{32}$ are the subwindows SW1 and SW2.

In S12, the selector 43 extracts, from the resources included in the set A, $\beta\%$ of the resources for which the channel usage rate of the corresponding subwindow is low. Here, the extracted resources are included in the set B. That is, the scheduler 33 creates the set B.

The process in S8 is substantially the same in FIG. 13 and FIG. 14. That is, the selector 43 randomly selects a resource to be allocated to the transmission data from the resources included in the set B. After this, the wireless communication device 20 transmits the transmission data using the resource selected in S8.

As described above, in the example illustrated in FIG. 14, the rank for each selectable resource is decided according to the channel usage rate of the corresponding subwindow. Therefore, in this example, the channel usage rate of the subwindow is an example of the evaluation value that represents the degree of probability to be selected of the resource in the resource allocation. Meanwhile, compared to the method illustrated in FIG. 13, in the method illustrated in FIG. 14, the amount of calculation related to the resource allocation is smaller, and the load on the processor operating as the scheduler 33 becomes smaller.

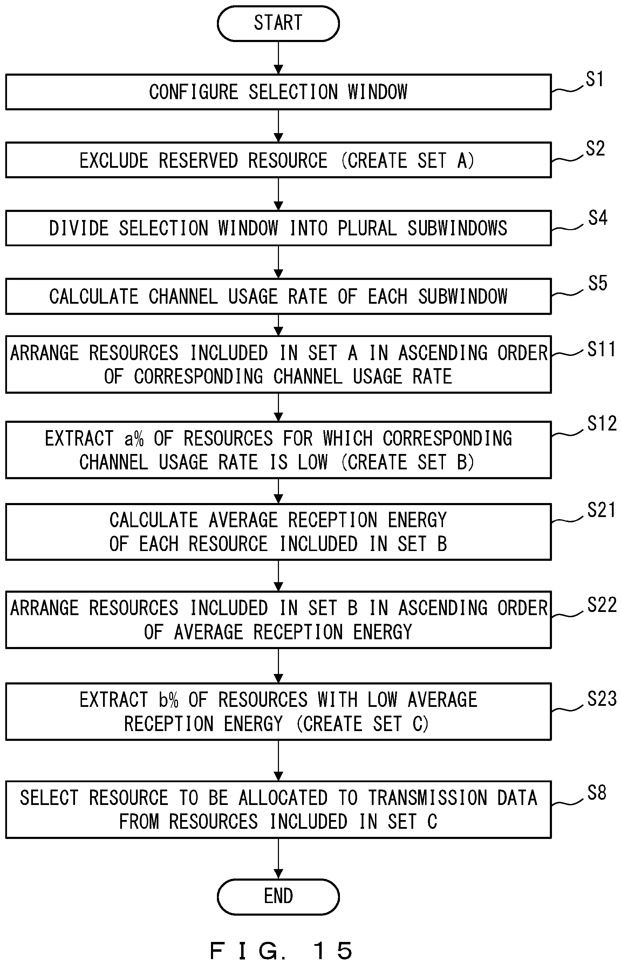

FIG. 15 is a flowchart illustrating yet another example of a resource allocation method. The processes in S1, S2, S4, S5, S11, S12 are substantially the same in FIG. 14 and FIG. 15, That is, the scheduler 33 divides the selection window (that is, the first section) to generate a plurality of subwindows (that is, the second sections) and calculates the channel usage rate (that is, the first evaluation value) of each subwindow. In addition, the scheduler 33 extracts a% of resources for which the channel usage rate of the corresponding subwindow is low. That is, the scheduler 33 creates the set B.

In S21, the scheduler 33 calculates the average reception energy of each resource included in the set B. In this example, the average RSSI of each resource included in the set B is calculated. The average RSSI is calculated using the expression (1) or the expression (3) for example.

In S22, the calculator 42 arranges the resources included in the set B according to the ascending order of the average RSSI. In S23, the selector 43 extracts b% of the resources that have a small RSSI. The extracted resources are included in a set C. That is, the scheduler 33 creates a set C.

The process in S8 is mostly the same in FIG. 13 through FIG. 15. However, the selector 43 randomly selects a resource to allocate to the transmission data from the resource included in the set C. After this, the wireless communication device 20 transmits the transmission data using the resource selected in S8. Thus, in the method illustrated in FIG. 15, resources included in a subwindow with a low channel usage rate are extracted.

Meanwhile, the resource selection criterion stored in the resource information memory 31 may include information to select one of the methods illustrated in FIG. 13 through FIG. 15. In addition, the resource selection criterion may include the value of $\beta$ presented in FIG. 13 through FIG. 14, or the value of a and the value of b presented in FIG. 15.

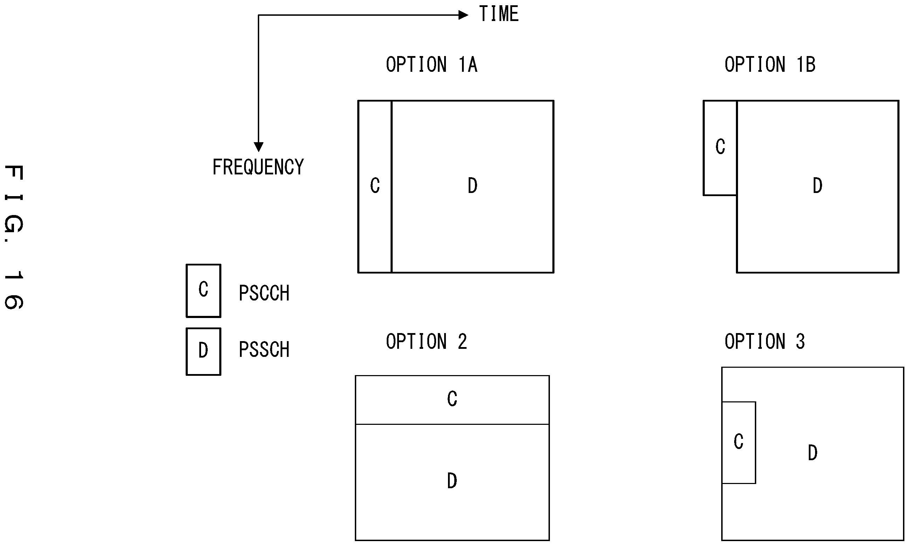

FIG. 16 illustrates an example of multiplexing of a control signal and a data signal. In this example, the control signal is transmitted via PSCCH (Physical Sidelink Control Channel). Meanwhile, the control signal transmits scheduling allocation information for a related data signal. Meanwhile, the data signal is transmitted via PSSCH (Physical Sidelink Shared Channel).

In Option 2, PSCCH and PSSCH are placed in the same time domain. Therefore, in a case in which Option 2 is used, the wireless communication device is not able to recognize a resource occupied by another wireless communication device immediately. Therefore, in a case in which Option 2 is used, the wireless communication device is able to remove only a resource reserved for periodic transmission.

In Options 1A and 1B, PSCCH and PSSCH are placed in different time domains. Specifically, PSCCH is placed before PSSCH. That is, the scheduling allocation information of a data signal is transmitted before the data signal. Therefore, in a case in which Options 1A or 1B is used, the wireless communication device is able to recognize a resource occupied by another wireless communication device immediately. In a similar manner, in Option 3, a resource occupied by another wireless communication device may be recognized. Therefore, in a case in which Options 1A, 1B or 3 is used, the wireless communication device is able to remove a resource occupied not only for periodic transmission but also for one-shot transmission.

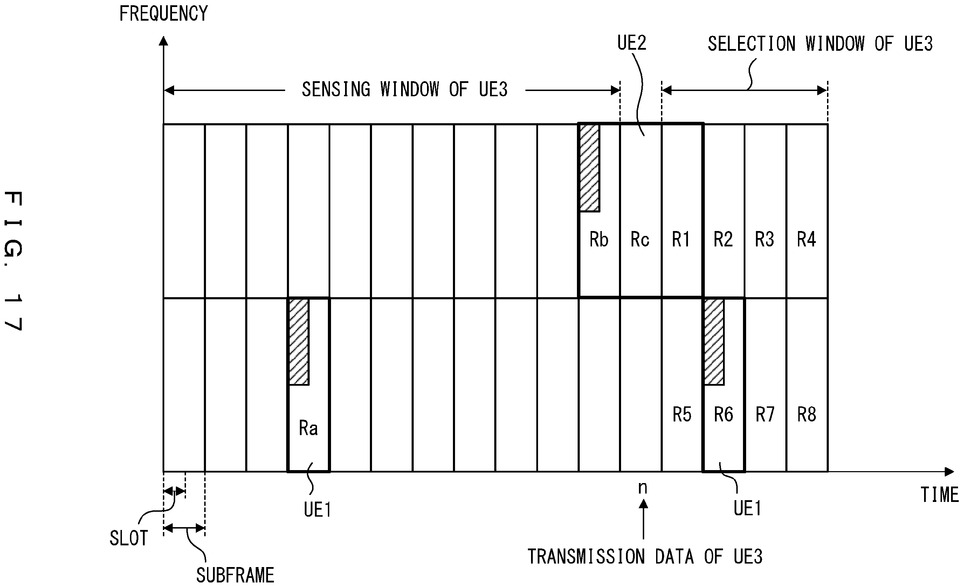

FIG. 17 illustrates an example of a method for selecting a resource from a selection window. In this example, it is assumed that in a subframe n, the transmission data of a UE3 is generated. In this case, the selection window of the UE3 is configured after the subframe n. Here, this selection window includes resources R1 through R8, as illustrated in FIG. 17. Meanwhile, the shaded area is allocated for PSCCH.

The UE1 performs periodic transmission. For example, the UE1 transmits sidelink data using a resource Ra. At this time, the UE1 reserves the resource for the next data transmission using PSCCH of the resource Ra. Here, a resource R6 is reserved.

A UE2 transmits sidelink data using a plurality of successive subframes. In the example illustrated in FIG. 17, the UE2 transmits sidelink data using resources Rb, Rc and R1. In this case, UE2 notifies, each UE of sidelink control information that represents the usage of the resources Rb, Rc and R1, using PSCCH of the resource Rb, for example.

The UE3 recognizes that the resource R6 is occupied by the UE1 by decoding PSCCH and that the resource R1 is occupied by the UE2. That is, the UE3 determines that the resources R1 and R6 cannot be allocated for its own transmission data. Then, the UE3 creates the set A by excluding the resources R1 and R6 from the resources R1 through R8 included in the selection window. As a result, the set A includes the resources R2-R5, R7 and R8. Meanwhile, each resource included in the set A is used as a selectable resource (or a candidate resource) that has the possibility to be allocated for transmission data.

Thus, when creating the set A, the wireless communication device excludes not only a resource that is reserved by another wireless communication device but also a resource that is actually occupied by another wireless communication device. Therefore, the selectable resource may represent a resource that is not reserved or occupied by another wireless communication device, in the resources included in the selection window (that is, the first section). In addition, the channel usage rate (that is, the first evaluation value) may represent the proportion of resources that are reserved or occupied by another wireless communication device, in the resources included in the selection window.

Then, according to one of the methods illustrated in FIG. 13 through FIG. 15, the resources in the set A are further narrowed down. One resource is randomly selected from the resources included in the set (that is, the set B or the set C) obtained last. The wireless communication device always receives a signal in a slot (or a subframe) other than that for transmission, even within the selection window. Therefore, according to the reception result in the selection window, in a case in which the selected resource is not occupied by a wireless communication device with higher priority, the wireless communication device transmits transmission data using the selected resource. In a case in which the selected resource is occupied first by a wireless communication device with higher priority, another resource is selected from the resources included in the set of resources obtained last. This step is repeated until a resource that is not occupied is found.

REFERENCE SIGNS LIST

| | |
|---|---|
| 10 | Base station (eNB or gNB) |
| 20 | Wireless communication device (UE or VUE) |
| 31 | Resource information memory |
| 33 | Scheduler |
| 41 | Division unit |
| 42 | Calculator |
| 43 | Selector |
| 39 | Energy detector |
| 100 | Wireless communication system |

**Claims**

1. A communication device comprising:

    a division unit that is configured to divide a first section including a plurality of resources into a plurality of second sections;
    a calculation unit that is configured to provide, for each of the second sections, a first evaluation value related to a channel usage rate and to calculate, for each of selectable resources included in the first section, a second evaluation value according to the first evaluation value; and
    a selection unit that is configured to select one or a plurality of resources to be allocated to transmission data from the selectable resources according to the second evaluation value.

2. The communication device according to claim 1, wherein
   the first section is divided into a plurality of second sections in a time domain.

3. The communication device according to claim 1, wherein
   the first evaluation value related to a channel usage rate indicates a proportion of resources reserved or occupied by another communication device.

4. The communication device according to claim 1, wherein
   the calculation unit determines a rank of the selectable resources according to the second evaluation value.

5. The communication device according to claim 1, wherein
   the calculation unit calculates, for each of selectable resources that are not reserved or occupied by another communication device, a second evaluation value according to a first evaluation value related to a channel usage rate of a corresponding second section and determines a rank of the selectable resources according to the second evaluation value.

6. The communication device according to claim 1, further comprising

    a measurement unit that is configured to measure, for each resource, a reception energy of a signal transmitted from another communication device, wherein
    the calculation unit calculates a second evaluation value of each of the selectable resources according to a first evaluation value related to a channel usage rate of a second subsection that includes each of the selectable resources and determines a rank of the selectable resources according to the second evaluation value.

7. The communication device according to claim 6, wherein
   the calculation unit

    calculates a second evaluation value of each of the selectable resources so that the lower the channel usage rate, the smaller the second evaluation value, and the lower the average reception energy, the smaller the second evaluation value; and
    performs ranking of the selectable resources so that the smaller the second evaluation value, the higher a rank.

8. The communication device according to claim 6, wherein
   when transmission without reservation of a resource by another communication device is performed in a resource for which a reception energy has been measured by the measurement unit, the calculation unit multiplies a value of the reception energy regarding the transmission without reservation of a resource by a weight that is smaller than 1.

9. The communication device according to claim 1, wherein
   when a first selectable resource is included in two or more second sections, the calculation unit calculates an evaluation value of the first selectable resource according to a highest channel usage rate in channel usage rates of the two or more second sections.

10. A communication device that receives a wireless signal transmitted from a transmission terminal, comprising:

    a control signal receiver that receives a control signal transmitted from the transmission terminal; and
    a data signal receiver that receives a data signal transmitted from the transmission terminal, wherein

the transmission terminal

divides a first section including a plurality of resources into a plurality of second sections;
provides a first evaluation value related to a channel usage rate for each of the second sections;
calculates, for each of selectable resources included in the first section, a second evaluation value according to the first evaluation value;
selects a resource to be allocated to transmission data from the selectable resources according to the second evaluation value;
generates resource allocation information that represents a selected resource; and
transmits a control signal that includes the resource allocation information and a data signal that includes the transmission data,

the control signal receiver obtains the resource allocation information from the control signal, and
the data receiver receives the data signal according to the resource allocation information.

11. A wireless communication system including a first communication device and a second communication device, wherein

the first communication device

divides a first section including a plurality of resources into a plurality of second sections;
provides a first evaluation value related to a channel usage rate for each of the second sections;
calculates, for each of selectable resources included in the first section, a second evaluation value according the first evaluation value;
selects a resource to be allocated to the transmission data from the selectable resources according to the second value;
generates resource allocation information that represents a selected resource; and
transmits a control signal that includes the resource allocation information and a data signal that includes the transmission data, and

the second communication device

obtains the resource allocation information from the control signal; and
receives the data signal according to the resource allocation information.

F I G.  1

F I G. 2

SELECTION
WINDOW

SENSING WINDOW

$T_0-1000$  $T_0-200$  $T_0-100$  $T_0$

F I G.  3

F I G. 4

F I G. 5

F I G.  6

F I G. 7

F I G . 8

F I G. 9

(a)

TIME

FREQUENCY

SW1

SW2

SW3

SW4

SW5

(b)

TIME

FREQUENCY

SW1

SW2

SW3

F I G.  1 0

F I G.  1 1

SUBCHANNEL x
(FREQUENCY)

| 4 | $R_{41}$ | $R_{42}$ | $R_{43}$ | $R_{44}$ | $R_{45}$ | $R_{46}$ | $R_{47}$ |
|---|---|---|---|---|---|---|---|
| 3 | $R_{31}$ | $R_{32}$ | $R_{33}$ | $R_{34}$ | $R_{35}$ | $R_{36}$ | $R_{37}$ |
| 2 | $R_{21}$ | $R_{22}$ | $R_{23}$ | $R_{24}$ | $R_{25}$ | $R_{26}$ | $R_{27}$ |
| 1 | $R_{11}$ | $R_{12}$ | $R_{13}$ | $R_{14}$ | $R_{15}$ | $R_{16}$ | $R_{17}$ |
| | 1 | 2 | 3 | 4 | 5 | 6 | 7 |

SLOT y
(TIME)

F I G. 1 2

START

CONFIGURE SELECTION WINDOW — S1

EXCLUDE RESERVED RESOURCE (CREATE SET A) — S2

CALCULATE AVERAGE RECEPTION ENERGY OF
EACH RESOURCE INCLUDED IN SET A — S3

DIVIDE SELECTION WINDOW INTO PLURAL SUBWINDOWS — S4

CALCULATE CHANNEL USAGE RATE OF EACH SUBWINDOW — S5

CALCULATE RANKING INDEX (RI) OF EACH RESOURCE
INCLUDED IN SET A — S6

EXTRACT $\beta\%$ OF RESOURCES WITH SMALL RANKING INDEX
(CREATE SET B) — S7

SELECT RESOURCE TO BE ALLOCATED TO TRANSMISSION DATA
FROM RESOURCES INCLUDED IN SET B — S8

END

F I G.  1 3

START

CONFIGURE SELECTION WINDOW — S1

EXCLUDE RESERVED RESOURCE (CREATE SET A) — S2

DIVIDE SELECTION WINDOW INTO PLURAL SUBWINDOWS — S4

CALCULATE CHANNEL USAGE RATE OF EACH SUBWINDOW — S5

ARRANGE RESOURCES INCLUDED IN SET A IN ASCENDING ORDER OF CORRESPONDING CHANNEL USAGE RATE — S11

EXTRACT $\beta\%$ OF RESOURCES FOR WHICH CORRESPONDING CHANNEL USAGE RATE IS LOW (CREATE SET B) — S12

SELECT RESOURCE TO BEALLOCATED TO TRANSMISSION DATA FROM RESOURCES INCLUDED IN SET B — S8

END

F I G. 1 4

```
                    ┌──────────┐
                    │  START   │
                    └──────────┘
                         │
                         ▼
┌─────────────────────────────────────────────────────┐
│          CONFIGURE SELECTION WINDOW                  │───S1
└─────────────────────────────────────────────────────┘
                         │
                         ▼
┌─────────────────────────────────────────────────────┐
│       EXCLUDE RESERVED RESOURCE (CREATE SET A)       │───S2
└─────────────────────────────────────────────────────┘
                         │
                         ▼
┌─────────────────────────────────────────────────────┐
│     DIVIDE SELECTION WINDOW INTO PLURAL SUBWINDOWS   │───S4
└─────────────────────────────────────────────────────┘
                         │
                         ▼
┌─────────────────────────────────────────────────────┐
│     CALCULATE CHANNEL USAGE RATE OF EACH SUBWINDOW   │───S5
└─────────────────────────────────────────────────────┘
                         │
                         ▼
┌─────────────────────────────────────────────────────┐
│  ARRANGE RESOURCES INCLUDED IN SET A IN ASCENDING    │───S11
│        ORDER OF CORRESPONDING CHANNEL USAGE RATE     │
└─────────────────────────────────────────────────────┘
                         │
                         ▼
┌─────────────────────────────────────────────────────┐
│    EXTRACT a% OF RESOURCES FOR WHICH CORRESPONDING   │───S12
│     CHANNEL USAGE RATE IS LOW (CREATE SET B)         │
└─────────────────────────────────────────────────────┘
                         │
                         ▼
┌─────────────────────────────────────────────────────┐
│         CALCULATE AVERAGE RECEPTION ENERGY           │───S21
│       OF EACH RESOURCE INCLUDED IN SET B             │
└─────────────────────────────────────────────────────┘
                         │
                         ▼
┌─────────────────────────────────────────────────────┐
│  ARRANGE RESOURCES INCLUDED IN SET B IN ASCENDING    │───S22
│        ORDER OF AVERAGE RECEPTION ENERGY             │
└─────────────────────────────────────────────────────┘
                         │
                         ▼
┌─────────────────────────────────────────────────────┐
│      EXTRACT b% OF RESOURCES WITH LOW AVERAGE        │───S23
│        RECEPTION ENERGY (CREATE SET C)               │
└─────────────────────────────────────────────────────┘
                         │
                         ▼
┌─────────────────────────────────────────────────────┐
│  SELECT RESOURCE TO BE ALLOCATED TO TRANSMISSION DATA│───S8
│        FROM RESOURCES INCLUDED IN SET C              │
└─────────────────────────────────────────────────────┘
                         │
                         ▼
                    ┌──────────┐
                    │   END    │
                    └──────────┘
```

F I G.  1 5

F I G. 1 6

F I G. 17

## INTERNATIONAL SEARCH REPORT

| International application No. |
| --- |
| PCT/JP2018/043271 |

### A. CLASSIFICATION OF SUBJECT MATTER
Int.Cl. H04W72/02(2009.01)i, H04W4/40(2018.01)i, H04W72/04(2009.01)i, H04W72/08(2009.01)i, H04W92/18(2009.01)i

According to International Patent Classification (IPC) or to both national classification and IPC

### B. FIELDS SEARCHED
Minimum documentation searched (classification system followed by classification symbols)
Int.Cl. H04B7/24-7/26, H04W4/00-99/00

Documentation searched other than minimum documentation to the extent that such documents are included in the fields searched
Published examined utility model applications of Japan    1922–1996
Published unexamined utility model applications of Japan  1971–2019
Registered utility model specifications of Japan         1996–2019
Published registered utility model applications of Japan 1994–2019

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | INTEL CORPORATION, Summary for NR-V2X AI-7.2.4.1.4 Resource allocation mechanism, 3GPP TSG RAN WG1 Meeting #95 R1-1813908, 15 November 2018, section 2.1 | 1–11 |
| A | INTEL CORPORATION, Resource allocation schemes for NR V2X sidelink communication, 3GPP TSG RAN WG1 Meeting #95 R1-1812491, 03 November 2018, section 4 | 1–11 |

☒ Further documents are listed in the continuation of Box C.    ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 29.01.2019 | 12.02.2019 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

# EP 3 886 514 A1

**INTERNATIONAL SEARCH REPORT**

International application No.

PCT/JP2018/043271

C (Continuation). DOCUMENTS CONSIDERED TO BE RELEVANT

| Category* | Citation of document, with indication, where appropriate, of the relevant passages | Relevant to claim No. |
|---|---|---|
| A | INTERDIGITAL INC., Resource allocation for NR V2X, 3GPP RAN WG1 Meeting #95 R1-1813164, 02 November 2018, section 2 | 1-11 |
| T | FUJITSU, Further considerations on NR-V2X resource selection procedure of mode 2(a) in mixture scenario, 3GPP TSG RAN WG1 Ad-Hoc Meeting 1901 R1-1900251, 11 January 2019, entire text, all drawings | 1-11 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GGP TS 36.211 V15.2.0,* June 2018
- *3GGP TS 36.212 V15.2.1,* July 2018
- *3GGP TS 36.213 V15.2.0,* June 2018
- *3GGP TS 36.300 V15.2.0,* June 2018
- *3GGP TS 36.321 V15.2.0,* July 2018
- *3GGP TS 36.322 V15.1.0,* July 2018
- *3GGP TS 36.323 V15.0.0,* July 2018
- *3GGP TS 36.331 V15.2.2,* June 2018
- *3GGP TS 36.413 V15.2.0,* June 2018
- *3GGP TS 36.423 V15.2.0,* June 2018
- *3GGP TS 36.425 V15.0.0,* June 2018
- *3GGP TS 37.340 V15.2.0,* June 2018
- *3GGP TS 38.201 V15.0.0,* December 2017
- *3GGP TS 38.202 V15.2.0,* June 2018
- *3GGP TS 38.211 V15.2.0,* June 2018
- *3GGP TS 38.212 V15.2.0,* June 2018
- *3GGP TS 38.213 V15.2.0,* June 2018
- *3GGP TS 38.214 V15.2.0,* June 2018
- *3GGP TS 38.215 V15.2.0,* June 2018
- *3GGP TS 38.300 V15.2.0,* June 2018
- *3GGP TS 38.321 V15.2.0,* June 2018
- *3GGP TS 38.322 V15.2.0,* June 2018
- *3GGP TS 38.323 V15.2.0,* June 2018
- *3GGP TS 38.331 V15.2.1,* June 2018
- *3GGP TS 38.401 V15.2.0,* June 2018
- *3GGP TS 38.410 V15.0.0,* June 2018
- *3GGP TS 38.413 V15.0.0,* June 2018
- *3GGP TS 38.420 V15.0.0,* June 2018
- *3GGP TS 38.423 V15.0.0,* June 2018
- *3GGP TS 38.470 V15.2.0,* June 2018
- *3GGP TS 38.473 V15.2.1,* July 2018
- *3GGP TR 38.801 V14.0.0,* March 2017
- *3GGP TR 38.802 V14.2.0,* September 2017
- *3GGP TR 38.803 V14.2.0,* September 2017
- *3GGP TR 38.804 V14.0.0,* March 2017
- *3GGP TR 38.900 V15.0.0,* June 2018
- *3GGP TR 38.912 V15.0.0,* June 2018
- *3GGP TR 38.913 V15.0.0,* June 2018
- *3GGP TS 22.186 V16.0.0,* September 2018
- *3GGP TS 37.885 V15.0.0,* June 2018